# EUROPÄISCHE PATENTSCHRIFT

(11) **EP 0 373 147 B1**
(45) Veröffentlichungstag und Bekanntmachung des Hinweises auf die Patenterteilung: **14.07.1993**
(21) Anmeldenummer: 89890310.9
(22) Anmeldetag: 05.12.1989
(51) Int. Cl.: A01K 5/02

(54) **Verfahren zur Aufbereitung und zur dosierten Abgabe von Mischfutter an mehrere Abgabestellen und Vorrichtung zur Durchführung des Verfahrens**
Method for the preparation and the dosed delivery of a feed mixture to several delivery points, and device for carrying out the method
Procédé pour la préparation, le dosage et la distribution d'un mélange alimentaire dans des récipients différents et installation pour le procédé

(30) Priorität: 07.12.1988 AT 2993/88; 14.06.1989 AT 1449/89
(43) Veröffentlichungstag der Anmeldung: 13.06.1990
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(56) Entgegenhaltungen:
- EP-A- 0 018 748
- EP-A- 0 196 125
- EP-A- 0 285 596
- BE-A- 856 089
- DE-A- 1 607 152
- DE-A- 3 602 048
- NL-A- 6 903 055
- SU-A- 1 042 711
- SU-A- 1 114 383
- POWER FARMING (INC. AGRICULTURAL MACHINERY JOURNAL) vol. 50, no. 3, 01 März 1973, SUTTON GB, Seite 20 COOLMAN: "EUROPEAN EYE-CATCHERS: SPEEDING UP PARLOUR FEEDING"

## Beschreibung

Die Erfindung betrifft ein Verfahren zur Aufbereitung und zur dosierten Abgabe von aus flüssigen und trockenen Bestandteilen bestehendem Mischfutter an mehrere Abgabestellen gemäß dem Oberbegriff des Patentanspruches 1.

Die Erfindung betrifft auch eine Vorrichtung zur Durchführung dieses Verfahrens gemäß dem Oberbegriff des Patentanspruches 2.

Ein derartiges Verfahren und eine zu seiner Durchführung geeignete Vorrichtung sind aus der DE-A-16 07 152 bekannt.

Bei diesem bekannten Verfahren werden über einen gemeinsamen Förderer den einzelnen Abgabestellen zugeordnete Vorratsbehälter mit Trockenfutter beschickt, wobei für die Dosierung jedem Vorratsbehälter eine Wiegevorrichtung zugeordnet ist. Für den Wasservorrat dient ein eigener Behälter mit in der Höhe einstellbarem Schwimmer. Waage und Schwimmer müssen zur Erzielung einer bestimmten Dosierung und eines bestimmten Mischverhältnisses an jeder Abgabestelle von Hand aus eingestellt werden. Auch Änderungen in der Futtermenge und des Mischungsverhältnisses können nur durch Einzeleinstellung an jeder Abgabestelle bewirkt werden. Ein Fütterungsprogramm mit sich ändernden Abgabemengen aufgrund des Tieralters oder des Mastzustandes ist schwer zu realisieren. Gleiches gilt auch für Änderungen der Abgabemengen, wenn sich der Nährstoffgehalt oder die Grundzusammensetzung des zur Verfügung stehenden Futters aufgrund des Hauptvorrates und der Marktlage ändert. Bei der Fütterung werden Futter und Flüssigkeit drucklos an den aus einem konischen Rohr bestehenden Mischer abgegeben, wobei der Flüssigkeitszulauf vor dem Trockenfutterzulauf beginnt und erst nach dem Trockenfutterzulauf endet, um Verschmutzungen des Mischers zu vermeiden. Es findet im wesentlichen nur eine Anfeuchtung des Trockenfutters statt und es können nur bestimmte Futtersorten bei der Trokkenfuttermischung ordnungsgemäß angefeuchtet werden. Ferner darf die Mischung erst eingeleitet werden, wenn der Vorratsbehälter die volle Trockenfuttermenge erhalten hat und der Flüssigkeitsbehälter bis zum Schwimmeranschlag gefüllt ist. Futter, das bei der Lagerung zum Verklumpen und Zusammenbakken neigt, z. B. Silage, kann nicht mehr ordnungsgemäß gemischt werden und würde sogar Auslässe oder Mischer trotz der Wasserzufuhr verstopfen.

Andere bekannte Verfahren und Vorrichtungen, wie sie aus der AT-A-384 928 bekannt sind, verwenden einen Mischbehälter in dem die verschiedenen festen und flüssigen Futterbestandteile zu einem Flüssig-Mischfutter aufbereitet werden, wobei dieses Flüssigfutter mit Hilfe des Förderers den Auslässen an den Abgabestellen zugeführt wird. Aus der EP-A-0 285 596 ist eine Vorrichtung zur dosierten Abgabe von Trockenfutter bekannt.

Unter Verwendung dieser letztgenannten Verfahren und Vorrichtungen ist es möglich, den einzelnen Abgabestellen vorgebbare Futtermengen zuzuführen, wobei, wenn eine durchschnittlich exakte Dosierung vorzunehmen ist, die bei einem Austeilvorgang auftretenden Abweichungen von den jeweiligen Sollmengen erfaßt und als Vorhaltewerte bei dem oder den nächsten Austeilvorgängen berücksichtigt werden können. Für diese Korrekturen wird ein Rechner der zentralen Steuereinheit eingesetzt. Es ist auch möglich, verschiedenen Abgabestellen verschiedene Futtermengen zuzuführen und sogar nacheinander verschiedene Abgabestellen mit Futter verschiedener Rezeptur zu beschicken. Änderungen der Vorgabewerte für die Futtermengen und verschiedene Futterrezepturen können in einem Speicher der zentralen Steuereinheit vorgespeichert werden, so daß im Extremfall eine vollautomatische Anmischung des Futters bzw. der verschiedenen Futtersorten und eine ebenfalls automatische Austeilung dieses Futters in den vorgegebenen Mengen und in der vorgegebenen Zusammensetzung an die einzelnen Abgabestellen möglich ist. Ein bevorzugtes Anwendungsgebiet der gegenständlichen Verfahren und Vorrichtungen ist die automatische Fütterung von Rindern und Schweinen bei Aufzucht und Mast.

Der entscheidende Vorteil der Fütterung mit flüssigem Futter besteht darin, daß durch die Breiform des Futters eine bessere Futterverwertung durch die Tiere erzielt wird, wobei manche Futtersorten überhaupt nur wirksam in breiiger Form verfüttert werden können, daß das breiige Futter sich leicht im jeweiligen Futtertrog verteilen läßt und daß ein entsprechend aufbereitetes Futter bisher praktisch das einzige Futter darstellt, mit dem vor allem die wertvolleren und teueren Futterbestandteile genau dosiert den Tieren individuell verabreicht werden können. Ein grundsätzlicher Nachteil der Flüssigfütterung nach den bisherigen Verfahren besteht darin, daß die Gesamtfuttermenge vom Mischbehälter zu den einzelnen Auslässen gefördert werden muß, daß aufwendige Förderanlagen notwendig sind, daß vielfach dem Futter ein größerer Flüssigkeitsanteil als an sich für die Fütterung selbst notwendig zugesetzt werden muß, um eine für die Förderung geeignete flüssige Futtermischung zu erhalten und schließlich, was einer der Hauptnachteile ist, daß das flüssige Futter nur über begrenzte Zeiträume haltbar ist, wobei eine Hauptgefahr auch darin besteht, daß durch verderbende Futterrückstände in Förderer und Leitung neu zubereitetes Futter infiziert wird oder überhaupt Krankheitserreger in den Futterrückständen einen günstigen Nährboden finden und bei der Futterausteilung zu allen Abgabestellen verschleppt werden.

Trockenfutter hat den Vorteil, daß es leicht transportiert werden kann, für den Transport nur einfache Förderer und geringe Antriebsleistungen benötigt werden und daß den Anforderungen der Hygiene leicht entsprochen werden kann, da trockene Futterrückstände für Infektionen nicht oder viel weniger anfällig als Flüssigfutter sind. Der Nachteil von Trockenfutter bei der bisherigen Art der direkten Verabreichung besteht darin, daß viele Futtersorten und insbesondere höherwertiges Futter von den Tieren in trockenem Zustand nicht oder nicht ausreichend aufgenommen werden können, so daß meist eine automatische Trockenfütterung durch zusätzliche Futtergaben in anderer Form ergänzt werden muß, wobei die Vorteile der automatischen und rationierten Fütterung teilweise verlorengehen.

Nach der EP-A-0 018 748 werden über einen Schneckenförderer einzelnen Futterstellen zugeordnete als Volumsdosierer dienende Vorratsbehälter befüllt, die durch eine Zeitschaltuhr gesteuert in einen Freßtrog entleert werden. Nach den Freßzeiten steuert die Zeitschaltuhr die Auslässe von Wasserzuleitungen, um die Tröge bis zu einem vorgegebenen Niveau mit Wasser zu füllen, um den Tieren die Möglichkeit zum Trinken zu geben. Eine Aufbereitung der Trockensubstanz durch die Flüssigkeit ist nicht vorgesehen.

Nach dem SU-ES 1 042 711 ist es bekannt, bröckeliges Futter über einen Längsförderer zu fördern und dabei durch Besprühen mit Wasser anzufeuchten, wobei dieses angefeuchtete Futter in einem Bunker zwischengelagert und dann vom Bunker weg verfüttert wird.

Nach dem SU-ES 1 114 383 werden Milchkühe in einem Melkstand so lange mit einer Mischung aus Trockenfutter und Wasser gefüttert, wie sie Milch abgeben, wobei nicht vorher festgelegte Futtermengen verabreicht, sondern nur ein Maximalwert für die mögliche Futterentnahme vorgegeben wird.

Nach der EP-A-0 196 125 ist ein einem Rundtrog zugeordneter zentraler Vorratsbehälter für Trockenmilch vorgesehen, wobei im Vorratsbehälter eine Tagesration an Trockenfutter durch Füllung von Hand aus vorgespeichert wird. Über ein Zeitschaltwerk wird Trockenfutter aus dem Vorratsbehälter portionsweise mit Wasser gemischt und in den Rundtrog geleitet.

Aufgabe der Erfindung ist die Schaffung eines Verfahrens und einer zu seiner Durchführung geeigneten Vorrichtung nach dem bzw. mit deren Hilfe Futter verschiedenster Form und Zusammensetzung genau dosiert mit dem richtigen Flüssigkeitsgehalt in breiiger Form verabreicht werden kann, wobei trotzdem Änderungen der Dosierung und der Futterzusammensetzung problemlos eingestellt werden können, mit einer einfachen Vorrichtung das Auslangen gefunden und den Anforderungen der Hygiene voll entsprochen wird.

Die gestellte Aufgabe wird verfahrensmäßig mit den im Anspruch 1 angegebenen Merkmalen gelöst.

Die Flüssigkeits- und Trockenfutterdosierung können zentral geregelt werden, so daß Änderungen in der Futtermenge und -zusammensetzung durch Programmierung der Steuereinrichtung möglich sind und auch das Verhältnis Trockensubstanz/Flüssigkeit über die zentrale Steuereinrichtung nach den jeweiligen Erfordernissen bestimmt werden kann, wobei nur soviel Flüssigkeit zugegeben wird, als dies für die Tiere erforderlich ist. Es ist möglich, in aufeinanderfolgenden Austeilvorgängen unterschiedliche Futtermengen auszuteilen, ohne daß dazu Manipulationen an den einzelnen Abgabestellen notwendig sind. Die Zugabe von Flüssigkeit kann unter Druck im Durchlaufverfahren erfolgen, so daß auch klumpiges Trockenfutter ausreichend benetzt bzw. durchmischt wird, wobei der Futterstrom vom Vorrat aus über den Förderer und den Mischer bis zur Abgabe kontinuierlich verläuft und nicht unterbrochen wird.

Bei der Trockensubstand können in aufeinanderfolgenden Austeilvorgängen Nachlaufkorrekturen nach bekannten Verfahren vorgenommen werden. Bei einem kontinuierlich arbeitenden Längs- oder Ringförderer für das Trockenfutter kann man über Absperr- und Regelorgane eine mittlere Strömungsgeschwindigkeit der Flüssigbestandteile einstellen und nach einer Variante die Gesamtdosierung nach Einstellung der Flüssigkeitsdosierung vornehmen. Flüssige Futterbestandteile sind vorwiegend Wasser und Molke, denen man im Bedarfsfall Medikamente, Vitamine, Aufbaustoffe und Spurenelemente gezielt zusetzen kann.

Die sich auf die Vorrichtung beziehende Teilaufgabe der Erfindung wird duch die im Patentanspruch 2 angegebenen Merkmale gelöst.

Es ist an sich möglich, den einzelnen Auslässen Mischbehälter mit motorisch antreibbarem Rührwerk zur Durchmischung des Futters zuzuordnen. Bevorzugt werden aber Mischer eingesetzt, die die Strömung der Futter-Trockensubstanz und/oder der unter Überdruck zugeführten Flüssigkeit zur Erzeugung eines Mischvorganges ausnützen. Eine mögliche Ausgestaltung entnimmt man dem Anspruch 3.

Neben Ketten- und Schneckenförderern für die Trockenmasse kann man bei sehr feinkörniger bzw. mehliger Trockenmasse einen Förderer gemäß Anspruch 4 verwenden. Hier kann ein Venturimischer eingesetzt werden, bei dem der die Trockenmasse tragende Luftstrom durch eine Düse geleitet und im Bereich der Kehle dieser Düse die Flüssigkeit eingesprüht wird. Auch Kombinationen aus Zyklon- und Venturimischern sind möglich.

Eine Ausgestaltung der Vorrichtung gemäß Anspruch 5 hat den Vorteil, daß sie besonders einfach ist und trotz dieser Vereinfachung der Steuerung unter Ausnützung des Gewichtes bzw. der Massenkräfte der ausströmenden Flüssigkeit eine genaue Dosierung der Futterabgabe an den einzelnen Auslässen durch Wägung der Trockensubstanz bzw. Einstellung der Dauer der Öffnungszeiten der einzelnen Absperrorgane für die Flüssigkeit möglich ist. Eine Abgabe von Trockensubstanz kann grundsätzlich nur gemeinsam mit der Flüssigkeitszufuhr zur jeweiligen Abgabestelle erfolgen.

Bei einer Weiterbildung der zuletzt genannten Ausführung gemäß Anspruch 6 können die Prallwände bzw. Schaufeln zugleich als Leiteinrichtungen dienen, die den Flüssigkeitsstrom ablenken, so daß er in mehr oder weniger fein verteilter Form in die dem Mischer zugeführte Trockensubstanz eindringt. Bei Verwendung von Zyklonmischern kann man einen Teil des Flüssigkeitsstromes für die Betätigung der Hilfsantriebe abzweigen und den anderen Teil dieses Flüssigkeitsstromes unmittelbar unter Überdruck in den Mischer leiten.

Eine andere Ausführungsvariante entnimmt man dem Anspruch 7. Hier kann vorgesehen werden, daß der Förderer während der Fütterungszeit ständig angetrieben wird und das Trockenfutter über eine Ringleitung fördert, die bei geschlossenen Auslässen gefüllt bleibt und das Futter in den Mischbehälter zurückleitet. Beim Öffnen eines Auslasses wird die tatsächliche Futtermenge über eine Wiegevorrichtung am Mischbehälter festgestellt.

Eine mögliche Ausführung des Auswurfförderers ist im Anspruch 8 angegeben. Hier kann das Schaufelrad zugleich einen Teil eines Vormischers für Trockenfutter und Flüssigkeit des dem Auslaß zugeordneten Mischers bilden.

Eine andere Ausführung des Auswurfförderers ist im Anspruch 9 angegeben. Bei Verwendung eines Auswurfförderers kann ein ähnlich ausgebildeter Mischer auch bei Selbstfütterungsanlagen eingesetzt werden. Hier steht der Auswurfförderer mit einem Futtervorratsbehälter in Verbindung und die Flüssigkeitszufuhr wird von einem einen Freßplatz betretenden Tier über Fühler oder ähnlich wie bei einer Selbsttränke über Anschläge am Freßplatz gesteuert.

Weitere Einzelheiten des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: eine nach dem erfindungsgemäßen Verfahren arbeitende erfindungsgemäße Vorrichtung im Schema,
- Fig. 2: ein Detail einer Ausführungsvariante der Vorrichtung,
- Fig. 3: schematisch im Längsschnitt einen einer Futterabgabestelle zugeordneten Mischer,
- Fig. 4: einen Mischer mit abgeändertem Absperrorgan und abgeänderter Betätigungseinrichtung in Draufsicht,
- Fig. 5: einen Mischer mit einem als Auswurfförderer ausgebildeten Absperrorgan für den Auslaß im Längsschnitt,
- Fig. 6: eine Draufsicht zu Fig. 5
und
- Fig. 7: einen weiteren Mischer im Längsschnitt.

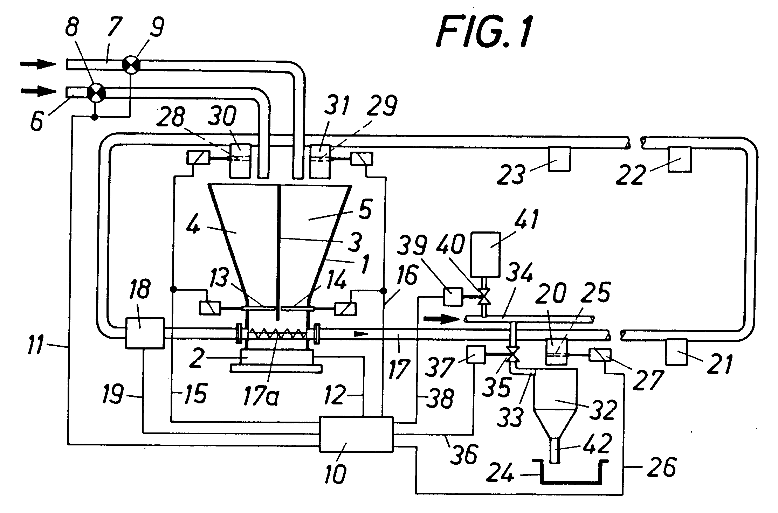

Bei der Vorrichtung nach Fig. 1 ist ein Futtervorratsbehälter 1 vorgesehen, der auf einer Wiegevorrichtung 2 abgestützt ist. Der Innenraum des Vorratsbehälters ist durch eine Trennwand 3 in zwei Abteilungen 4, 5 unterteilt, die jeweils eine zumindest für einen Austeilzyklus ausreichende Vorratsmenge an Futter-Trockensubstanz aufnehmen. Die Abteile 4 und 5 können über Leitungen 6 und 7 und Absperrorgane 8, 9 mit Futter- bzw. Futterzutaten beschickt werden, wobei man mit Hilfe der Wiegevorrichtung 2 das Einwiegen der Futtervorräte bzw. Futterzutaten steuern kann. Zu diesem Zweck ist ein einen Teil einer zentralen Steuereinheit bildender Computer 10 mit den Absperrorganen 8, 9 über eine Steuerleitung 11 verbunden und über eine Leitung 12 an die Wiegevorrichtung 2 angeschlossen. Auch eine Durchmischung der Futterzutaten in den Abteilungen 4, 5 mit Hilfe nicht dargestellter Rühreinrichtungen usw. wird von der zentralen Steuereinheit 10 gesteuert.

Die beiden Abteilungen 4, 5 des Vorratsbehälters 1 sind durch je ein Absperrorgan 13, 14 auslaßseitig abschließbar, welche Absperrorgane vom Steuercomputer 10 über Leitungen 15, 16 gesteuert werden. Beim Ausführungsbeispiel ist ein als Ringförderer ausgebildeter, für Trockensubstanz geeigneter Rohrförderer 17 mit beispielsweise aus einer Schnecke 17a oder einer Förderkette mit Mitnehmern bestehendem Förderorgan und einer Antriebseinheit 18 vorgesehen, die ebenfalls vom Computer 10 über eine Leitung 19 gesteuert wird.

An den Rohrförderer 17 schließen Auslässe 20 - 23 an, die den einzelnen Abgabestellen 24, beispielsweise Futtertrögen, zugeordnet sind. Jeder Auslaß 20 enthält einen Absperrschieber 25, der vom Computer 10 über Steuerleitungen 26 und nicht dargestellte, über Magnetventile 27 betätigte, pneumatische Antriebseinrichtungen im Öffnungs- und Schließsinn betätigbar ist. Zwei weitere, mit Absperrschiebern 28, 29 versehene Auslässe 30, 31 sind über den beiden Abteilungen 4, 5 des Vorratsbehälters 1 angeordnet.

Jedem der Auslässe 20 - 23 ist ein beim Ausführungsbeispiel schematisch nur für den Auslaß 20 und den Futtertrog 24 dargestellter Mischer 32 zugeordnet, der einen vom jeweiligen Auslaß 20, 21 usw. beschickbaren Einlaß für die Futter-Trokkensubstanz und einen weiteren Einlaß 33 aufweist, der von einer Flüssigkeitsleitung 34 her über ein Absperrorgan 35, das vom Computer 10 über eine Steuerleitung 36 und einen Steuermagneten 37 betätigbar ist, mit unter Druck stehender Flüssigkeit, beispielsweise Wasser, beschickt werden kann, wobei die Flüssigkeitsleitung 34 zusätzliche Einlässe für über vom Computer 10 über Leitungen 38 und Magnetventile 39, aus unter Überdruck stehenden Vorratsbehältern 41 zuführbare, weitere Zutaten, beispielsweise Medikamente, enthalten kann. Ein Auslaß 42 des Mischers 32 führt in den Futtertrog 24.

Beim Fütterungsvorgang werden durch den Computer 10 gesteuert die Ausläße 20 - 23 wahlweise aus den Abteilung 4 oder 5 mit vorgegebenen Futtermengen beschickt, wobei die Vorgabe nach dem über die Wiegeeinrichtung 2 erfaßbaren Gewicht oder durch im Computer 10 vorgespeicherte Werte der Öffnungszeiten der Absperrorgane 25 erfolgt. Gleichzeitig mit der Abgabe der Futter-Trockensubstanz an den dem jeweiligen Auslaß 20, 21 dem nachgeordneten Mischer wird über den Computer 10 auch das Absperrorgan 35 geöffnet, so daß die Futter-Trockensubstanz im Mischer mit Flüssigkeit vermischt und an die Abgabestelle 24 abgegeben wird. Auch die tatsächlich zugeführte Flüssigkeitsmenge kann über in der Leitung 34 liegende Meßeinrichtungen erfaßt und an den Computer 10 rückgemeldet werden.

Nach der Futterabgabe an einer Abgabestelle oder an allen Abgabestellen werden die über die Wiegeeinrichtung 2 erfaßten Ist-Abgabemengen bzw. die Gesamtabgabemenge an Trokkensubstanz mit den Soll-Abgabemengen bzw. der Summe der Sollabgabemengen verglichen und es werden Vorhaltewerte berechnet, um die die Dosierung für die einzelnen Abgabestellen beim nächsten Fütterungszyklus korrigiert wird (einzelne oder Summen-Nachlaufkorrektur). Im Bedarfsfall wird eine entsprechende Nachlaufkorrektur durch Änderung der Öffnungs- oder Schließzeiten auch für die Flüssigabgabeventile 35 vorgenommen. Jeder Futterabgabestelle wird eine über die zentrale Steuereinheit individuell zumindest hinsichtlich des Gehaltes an Trockensubstanz vorgebbare Futtermenge zugeführt, wobei verschiedenen Auslässen mit Hilfe des gleichen Förderers auch verschiedene Futtermengen und verschiedene Futtermischungen zugeleitet werden können.

Es ist auch möglich, die Schieber 25 usw. sowie die Ventile 35 jeweils gemeinsam an den Abgabestellen zu betätigen und die Steuerung der Flüssigkeitsmenge über ein gemeinsames vor dem Anschluß des Ventiles 40 in der Leitung 34 liegendes von der zentrales Steuereinheit 10 betätigtes Absperr- oder Regelorgan vorzunehmen.

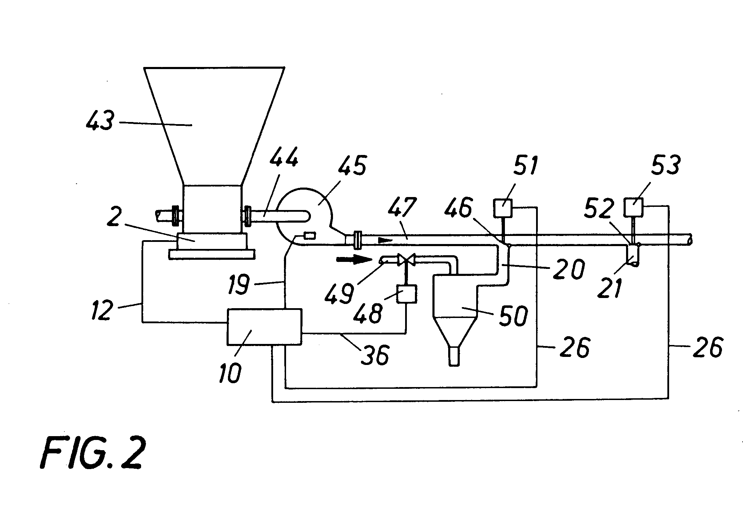

Bei der Ausführungsvariante nach Fig. 2 ist ein Mischbehälter 43 für die Trockensubstanz vorgesehen, der wieder auf einer Wiegeeinrichtung 2 abgestützt ist, die mit der zentralen Steuereinheit 10 in Verbindung steht. Als Förderer dient ein an einen Auslaß des Behälters 43 angeschlossener Gebläseförderer 45, der von der zentralen Steuereinheit 10 gesteuert wird, wobei diese Steuereinheit an den einzelnen Abgabestellen vorgesehene Weichen 46 in einem gemeinsamen, vom Fördergebläse 45 beschickten Förderrohr 47 stellt und Steuergmagnete 48 für in der Flüssigkeitszuleitung 49 zu den Mischern 50 an den einzelnen Abgabestellen liegende Absperrorgane betätigt. Beim Ausführungsbeispiel wurde an der ersten Abgabestelle eine über einen Magneten 51 betätigte Weiche 46 in der Offenstellung und eine weitere Weiche 52 an der nächsten Abgabestelle gezeigt, wobei die Weiche 52 über ihren Steuermagneten 53 in der unbetätigten Stellung gehalten ist, also den Durchtritt von dem im Luftstrom getragenen Trockenfutter zuließe. Die von der zentralen Steuereinheit 10 wegführenden Steuerleitungen und die Auslässe 20, 21 wurden analog zu Fig. 1 bezeichnet.

Die Futterabgabe und die Vermischung des Futters mit Flüssigkeit in den Mischern 50 usw. kann analog zu dem in Fig. 1 dargestellten Beispiel erfolgen. Es ist aber auch möglich, im Misch- oder Vorratsbehälter 43 jeweils nur die für einen bestimmten Auslaß 20, 21 usw. bestimmte Futtermenge nach einer vorgegebenen Rezeptur vorzubereiten und dann diese gesamte, durch die Wiegeeinrichtung 2 erfaßte Futtermenge dem zugehörigen Auslaß 20, 21 usw. zuzuführen.

Bei beiden Ausführungsformen ist es möglich, die Mischer 32, 50 sowie gegebenenfalls auch die Futtertröge 24 nach jeder Fütterung bzw. in vorgebbaren Intervallen durch Zufuhr von Flüssigkeit allein über die Leitungen 34 bzw. 49 und die zugeordneten Absperrorgane zu spülen, wobei der Spülflüssigkeit gegebenenfalls Desinfektions- oder Reinigungsmittel zugesetzt werden. Die Spülvorgänge werden von der zentralen Steuereinheit 10 gesteuert.

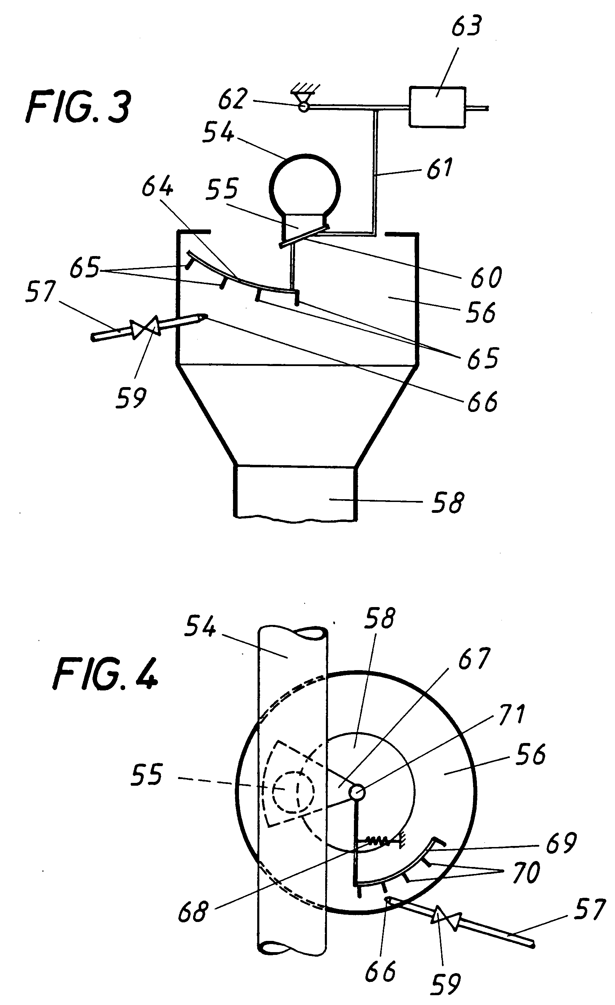

Bei den Mischerkonstruktionen nach den Figuren 3 bis 7 ist der Förderer 54 eines Ringförderers gezeigt, in dem an jeder Abgabestelle eine Auslaßöffnung 55 vorgesehen ist, von der aus bei geöffnetem Absperrorgan Trockenfutter in einen Mischer 56 gelangt, in dem es mit der über eine Leitung 57 zugeführten Flüssigkeit vermischt und schließlich über einen Auslaß 58 an einen Futtertrog abgegeben wird. Der Steuercomputer 10 steuert bei dieser Ausführung nur die in den den einzelnen Mischern zugeordneten Flüssigkeitsleitungen 57 liegenden Absperrorgane 59, z. B. Magnetventile.

Nach Fig. 3 ist für die Auswurföffnung 55 eine Verschlußklappe 60 vorgesehen, die über ein Haltegestänge 61 um eine feste Achse 62 schwenkbar und durch ein Gegengewicht 63 in der Schließstellung gehalten ist. Mit der Klappe 60 steht ferner eine kreisförmig um die Achse 62 gebogene Tragplatte 64 mit Schaufeln 65 in Verbindung, wobei diese Schaufeln 65 mittels einer an die Leitung 57 anschließenden Spritzdüse 66 mit der unter Druck stehenden Flüssigkeit beaufschlagbar sind, so daß die Klappe 60 bei der Beaufschlagung öffnet und zusätzlich zu dem über 57 zugeführten Wasser Futter-Trockensubstanz aus dem Förderer 54 in den Mischer 56 gelangt.

Nach Fig. 4 ist ein Schwenkschieber 67 vorgesehen, der durch eine Feder 68 in einer die Austrittsöffnung 55 abschließenden Stellung gehalten wird und durch Beaufschlagung von auf einem Träger 69 sitzenden Schaufeln 70 von der Düse 66 aus um seine Schwenkachse 71 verschwenkt wird, so daß er die Austrittsöffnung freigibt.

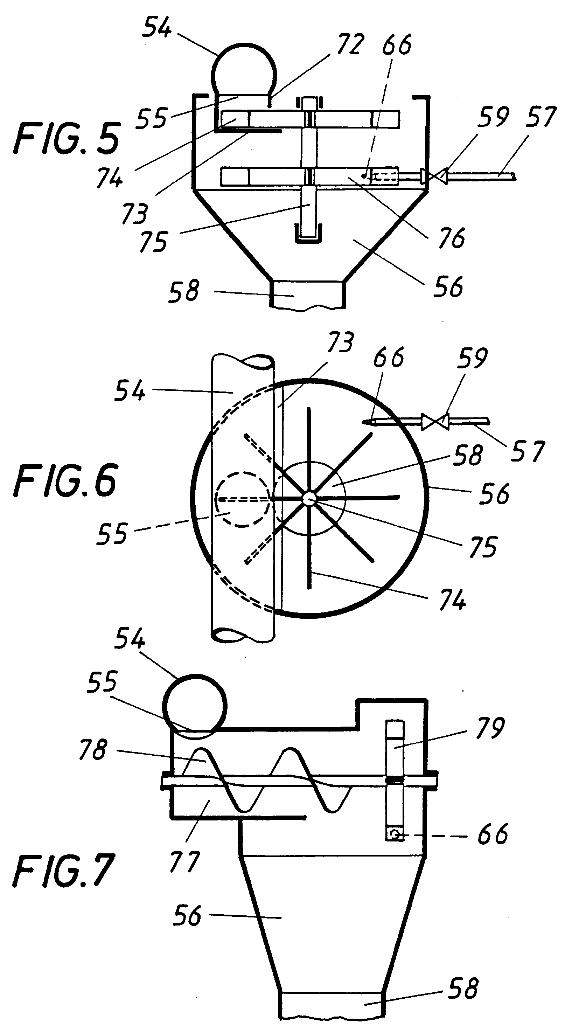

Nach den Fig. 5 und 6 schließt an die Austrittsöffnung 55 ein kurzer Fallschacht 72 an, der zu einem die Form eines hohlen Zylindersegmentes aufweisenden Gehäuse 73 führt, in das ein Flügelrad 74 eingreift. Dieses Flügelrad sitzt auf einer gemeinsamen Welle 75 mit einem Schaufelrad 76, das von der Düse 66 wieder mit unter Druck stehender Flüssigkeit beaufschlagbar ist. Bei angetriebenem Flügelrad 74 fördert es aus dem im Ruhezustand von ihm abgeschlossenen Gehäuse 73 Futter in den Mischer 56.

Schließlich schließt nach Fig. 7 an die Auswurföffnung 55 quer ein zum Mischer 56 führendes Förderrohr 77 an, in dem eine Förderschnecke 78 angebracht ist, die von einem von der Düse 66 her beaufschlagbaren Schaufelrad 79 antreibbar ist, im Ruhezustand den Auslaß 55 sperrt und bei ihrem Antrieb das am Auslaß 55 anfallende, vom Förderer 54 zugebrachte Trockenfutter in den Mischer 56 fördert.

Unter "Trockenmasse" wird jedes trockene bis krümelige Futter verstanden, welches sich über einen für Futter-Trockenmasse geeigneten Förderer fördern läßt. Im Mischbehälter können verschiedene Trockensubstanzen von mehliger, körniger, pelletierter und krümeliger Struktur gemischt und dann über den Trockenförderer transportiert werden. Auch zerkleinerte Silage (für die Schweinemast insbesondere CCM) hat trotz ihres Feuchtigkeitsgehaltes bis zu 40 Vol. % eine krümelige Struktur und eignet sich allein oder in Mischung mit anderen Trockensubstanzen für die Förderung im Trockenförderer, so-ferne korrosionsfestes Material für die Förderorgane und die Förderleitungen eingesetzt wird.

## Patentansprüche

1. Verfahren zur Aufbereitung und zur dosierten Abgabe von aus flüssigen und trockenen Bestandteilen bestehendem Mischfutter an mehrere Abgabestellen (24), bei dem mittels eines gemeinsamen Längs- oder Ringförderers (17, 17a, 45, 47, 54) von einem Futtervorrat (4, 5) aus nur die trockenen Bestandteile des Futters zu den Abgabestellen (24) zugeordneten Auslässen (20 bis 23, 55) gefördert, an diesen in vorgebbaren Mengen abgegeben und in den Abgabestellen vorgeordneten Mischstufen (32, 50, 56) mit den über gesonderte Leitungen (33, 49, 57) zugeführten flüssigen Futterbestandteilen, deren Menge ebenfalls vorgebbar ist, zu einem Futterbrei vermischt werden, der an den Abgabestellen ausgegeben wird, dadurch gekennzeichnet, daß die Abgabemengen der trockenen Futterbestandteile von einer zentralen Steuereinheit (10) vorgebbar und über Wiegeeinrichtungen (2) für die trockenen Futterbestandteile und/oder Steuereinrichtungen (25, 46, 59) für die Öffnungszeiten der Auslässe (20 bis 23, 55) bestimmt werden, daß über die zentrale Steuereinheit (10) auch die Zufuhr der flüssigen Futterbestandteile geregelt wird und daß die trockenen Futterbestandteile vom Längs- oder Ringförderer (17, 17a, 45, 47, 54) aus über die Auslässe (20 bis 23, 55) im Durchlauf unmittelbar in die Mischstufen (32, 50, 56) geleitet, mit den flüssigen Futterbestandteilen vermischt und unmittelbar ausgegeben werden.

2. Vorrichtung zur Durchführung des Verfahrens nach Anspruch 1, mit wenigstens einem Misch- oder Vorratsbehälter (1, 43) für einen Futtervorrat (4, 5), einem Längs- oder Ringförderer (17, 17a, 45, 47, 54) für Trockenfutter, der das Trockenfutter vom Misch- oder Vorratsbehälter (1, 43) zu mehreren Auslässen (20 bis 23, 55) fördert, die Futterabgabestellen (24) zugeordnet sind, Dosiereinrichtungen zur Bestimmung der Abgabemengen des Trockenfutters an den Auslässen (20 bis 23, 55), gesonderten Zuleitungen (34, 49, 57) für die flüssigen Futterbestandteile und den Abgabestellen (24) vorgeordneten Mischern (32, 50, 56), die mit den vorgegebenen Mengen an trockenen und flüssigen Futterbestandteilen beschickbar sind und den in ihnen aufbereiteten Futterbrei an die jeweilige Abgabstelle abgeben, dadurch gekennzeichnet, daß die Abgabemengen an flüssigen und trockenen Futterbestandteilen von einer zentralen Steuereinheit (10) vorgebbar und von diesen über Wiegeeinrichtungen (2) für den Futtervorrat (4, 5) und/oder Steuereinrichtungen (25, 46, 59) für die Öffnungszeiten der Auslässe bestimmbar sind, daß der jeder Abgabestelle zugeordnete Auslaß (20 bis 23, 55) des Längs- oder Ringförderers (17, 17a, 45, 47, 54) das Trockenfutter in der jeweiligen Abgabemenge unmittelbar an den Mischer (32, 50, 56) abgibt und dieser gleichzeitig von der Flüssigkeitszuleitung (34, 49, 57) über von der zentralen Steuereinheit (10) gesteuerte Absperrorgane (35, 38, 49) mit den flüssigen Futterbestandteilen, insbesondere Wasser, beschickbar ist, so daß er das Mischfutter im Durchlauf aufbereitet und unmittelbar an die Abgabestelle (24) abgibt.

3. Vorrichtung nach Anspruch 2, dadurch gekennzeichnet, daß der Mischer (32, 50, 56) als Zyklonmischer mit Einlässen (20 bis 23, 33, 55, 66) für die unter Überdruck zugeführte Flüssigkeit und die Futter-Trockenmasse und einem zur Futterabgabestelle (24) führenden Auslaß (42, 58) ausgebildet ist.

4. Vorrichtung nach Anspruch 2 oder 3, dadurch gekennzeichnet, daß der Förderer für die Trockenmasse ein Fördergebläse (45) mit das Futter zur jeweiligen Abgabestelle (20, 21) ableitenden, stellbaren Weichen (46, 52) im Förderrohr (47) ist.

5. Vorrichtung nach einem der Ansprüche 2 bis 4, dadurch gekennzeichnet, daß die zentrale Steuereinheit (10) nur die Absperrorgane für die Zufuhr der Flüssigkeit zu den Mischern (56) direkt steuert und daß die Absperrorgane (60, 67, 74, 78) an den Auslässen (55) des Förderers (54) über von der Flüssigkeit beaufschlagte, den Absperrorganen (59) der Flüssigkeitsleitung (57) im Führungsweg der Flüssigkeit nachgeordnete Hilfsantriebe (64, 65, 69, 70, 76, 79) betätigbar sind.

6. Vorrichtung nach Anspruch 5, dadurch gekennzeichnet, daß die an den Auslässen (55) des Förderers (54) vorgesehenen Absperrorgane (62, 77) als durch Federn (68) oder Gewichte (63) in der Schließstellung gehaltene Klappen (60) oder Schieber (67) ausgebildet und über von der in den Mischer (56) eintretenden Flüssigkeit beaufschlagbare Prallwände oder Schaufeln (65, 70) und Gestänge im Öffnungssinn betätigbar sind.

7. Vorrichtung nach Anspruch 5, dadurch gekennzeichnet, daß die an den Auslässen (55) des Förderers (54) vorgesehenen Absperrorgane als Auswurfförderer (73, 74, 77, 78) ausgebildet sind, die im Stillstand den zugeordneten Auslaß (55) sperren, über eine von der austretenden Flüssigkeit beaufschlagte Kleinturbine oder ein Schaufelrad (76) antreibbar sind und bei ihrem Antrieb das Futter aus dem Förderer (54) in den Mischer (56) fördern.

8. Vorrichtung nach Anspruch 7, dadurch gekennzeichnet, daß als Auswurfförderer ein mehrere Kratzerschaufeln (74) oder -flügel aufweisendes, in einen Auswurfschacht (72, 75) des Förderers (54) eingreifendes Flügel- oder Zellrad vorgesehen ist, das von einem im Flüssigkeitsstrom liegenden Schaufelrad (76) antreibbar ist.

9. Vorrichtung nach Anspruch 7, dadurch gekennzeichnet, daß der Auswurfförderer als Förderschnecke (78) ausgebildet und in einen an eine unterseitige Auswurföffnung (75) des Förderers (54) quer anschließenden, zum Mischer (56) führenden Förderrohr (77) angebracht sowie von einer im Flüssigkeitsstrom liegenden Kleinturbine oder einem Flügelrad (79) antreibbar ist.

## Claims

1. A method of preparation and metered delivery of mixed fodder consisting of liquid and dry constituents to a number of delivery stations (24), only the dry constituents of the fodder being conveyed by a common longitudinal or annular conveyor (17, 17a, 45, 47, 54) from a supply (4, 5) to outlets (20 - 23, 55) associated with the delivery stations (24), delivered to the outlets in predetermined quantities and mixed with liquid fodder constituents supplied via separate lines (33, 49, 57), and the amount of which is likewise presettable, in mixing stages (32, 50, 56) preceding the delivery stations, to form a fodder slurry which is discharged at the delivery stations, characterised in that the amounts of dry fodder constituents delivered are presettable by a central control unit (10) and are determined by devices (2) for weighing the dry fodder constituents and/or devices (25, 46, 59) for controlling the opening times of the outlets (20 - 23, 55), and the supply of liquid fodder constituents is also controlled by the central control unit (10) and the dry fodder constituents are conveyed by longitudinal or annular conveyors (17, 17a, 45, 47, 54) through the outlets (20 - 23, 55) continuously and directly to the mixing stages (32, 50, 56), mixed with the liquid fodder constituents and directly discharged.

2. A device for working the method according to claim 1, comprising at least one mixing or storage container (1, 43) for a fodder supply (4, 5), a longitudinal or annular conveyor (17, 17a, 45, 47, 54) for dry fodder and conveying the dry fodder from the mixing or storage container (1, 43) to a number of outlets (20 - 23, 55) associated with fodder delivery stations (24), metering devices for determining the amount of dry fodder delivered to the outlets (20 to 23, 55), separate supply lines (34, 49, 57) for the liquid fodder constituents and mixers (32, 50, 56) preceding the delivery stations (24) and adapted to be loaded with the preset quantities of dry and liquid fodder constituents and delivering the fodder slurry processed therein to the respective delivery station, characterised in that the amounts of liquid and dry fodder constituents delivered are presettable by a central control unit (10) and can be determined by the control unit via devices (2) for weighing the fodder supply (4, 5) and/or devices (25, 46, 59) for controlling the opening times of the outlets, and the outlet (20 - 23, 55) of the longitudinal or annular conveyor (17, 17a, 45, 47, 54) associated with each delivery station delivers the respective quantity of dry fodder directly to the mixer (32, 50, 56) and the mixer is loadable with the liquid fodder constituents, particularly water, simultaneously by the liquid supply line (34, 49, 57) via shut-off means (35, 38, 49) controlled by the central control unit (10), so that the mixer continuously processes the mixed fodder and delivers it directly to the delivery station (24).

3. A device according to claim 2, characterised in that the mixer (32, 50, 56) is in the form of a cyclone mixer with inlets (20 - 23, 33, 55, 66) for the liquid conveyed under excess pressure and the dry fodder material and an outlet (42, 58) leading to the fodder delivery station (24).

4. A device according to claim 2 or 3, characterised in that the dry-material conveyor is a blower (45) comprising adjustable deflectors (46, 52) in the conveyor tube (47) for directing the fodder towards the respective delivery station (20, 21).

5. A device according to any of claims 2 to 4, characterised in that the central control unit (10) directly controls only the means for shutting off the supply of liquid to the mixers (56), and the shut-off means (60, 67, 74, 78) at the outlets (55) of the conveyor (54) are actuatable by auxiliary drives (64, 65, 69, 70, 76, 79) operated by the liquid and disposed in the guide path of the liquid downstream of the shut-off means (59) on the liquid line (57).

6. A device according to claim 5, characterised in that the shut-off means (62, 77) provided at the outlets (55) of the conveyor {54) are flaps (60) or slide valves (67) held in the closed position by springs (68) or weights (63) and actuatable in the opening direction-by linkages and baffles or scoops (65, 70) acted upon by the liquid entering the mixer (56).

7. A device according to claim 5, characterised in that the shut-off means provided at the outlets (55) of the conveyor (54) are ejector conveyors (73, 74, 77, 78) which block the associated outlet (55) when inoperative and are drivable by a small turbine or impeller (76) acted upon by the outflowing liquid and when driven convey the fodder from the conveyor (54) into the mixer (56).

8. A device according to claim 7, characterised in that the ejector conveyor is a vane wheel or cell wheel comprising a number of scraper scoops (74) or vanes and engaging in an ejector shaft (72, 75) in the conveyor (54) and drivable by an impeller (76) disposed in the stream of liquid.

9. A device according to claim 7, characterised in that the ejector conveyor is a conveyor screw (78) and is disposed in a tube (77) transversely adjacent an ejection opening (75) on the underside of the conveyor (54) and leading to the mixer (56) and is drivable by a small turbine or vane wheel (79) in the stream of liquid.

## Revendications

1. Procédé de préparation et de distribution dosée d'aliment composé de constituants liquides et secs à plusieurs points de distribution (24), dans lequel seuls les constituants secs de l'aliment sont transportés à partir d'une réserve d'aliment (4, 5) au moyen d'un transporteur commun linéaire ou circulaire (17, 17a, 45, 47, 54), à partir d'une réserve d'aliment (4, 5), à des sorties (20 à 23, 55) associées aux points de distribution (24), distribués à ces sorties en quantités pouvant être prédéterminées, et mélangés, dans des étages de mélange (32, 50, 56) prévus aux points de distribution avec les constituants liquides de l'aliment, qui sont acheminés par des conduites distinctes (33, 49, 57), et dont la quantité peut elle aussi être prédéterminée, pour former une pâte d'aliment qui est débitée aux points de distribution,
caractérisé par le fait que les quantités de distribution des constituants secs de l'aliment sont déterminées, à une valeur prédéterminée par une unité de commande centrale (10), et par l'intermédiaire de dispositifs de pesage (2) pour les constituants secs de l'aliment et/ou de dispositifs de commande (25, 46, 59) pour les temps d'ouverture des sorties (20 à 23, 55), par le fait que l'acheminement des constituants liquides de l'aliment est réglé au moyen de l'unité de commande centrale (10) et par le fait que les constituants secs de l'aliment sont introduits directement du transporteur linéaire ou circulaire (17, 17a, 45, 47, 54) où ils sont en circulation continue, dans les étages de mélange (32, 50, 56), par l'intermédiaire des sorties (20 à 23, 55), mélangés avec les constituants liquides de l'aliment et directement débités.

2. Dispositif pour la mise en oeuvre du procédé selon la revendication 1, comprenant un silo de mélange ou de réserve (1, 43) destiné à contenir une réserve d'aliment (4, 5), un transporteur linéaire ou circulaire (17, 147a, 45, 47, 54) pour l'aliment sec, qui transporte l'aliment sec du silo de mélange ou de réserve (1, 43) à plusieurs sorties (20 à 23, 55), qui sont associées à des points (24) de distribution de l'aliment, des dispositifs de dosage destinés à déterminer les quantités de distribution de l'aliment sec aux sorties (20 à 23, 55), des conduites d'amenée séparées (34, 49, 57) pour les constituants liquides de l'aliment et des mélangeurs (32, 50, 56) associés aux points de distribution (24), en position amont, qui peuvent recevoir les quantités prédéterminées de constituants secs et liquides de l'aliment, et débitent la pâte d'aliment préparée dans ces mélangeurs aux points de distribution correspondant,
caractérisé par le fait que les quantités distribuées de constituants liquides et secs de l'aliment peuvent être prédéterminées par une unité de commande centrale (10) et peuvent être déterminées par celle-ci, par l'intermédiaire de dispositifs de pesage (2) agissant sur la réserve d'aliment (4, 5) et/ou de dispositifs de commande (25, 46, 59) agissant sur les temps d'ouverture des sorties, par le fait que la sortie (20 à 23, 55) du transporteur linéaire ou circulaire (17, 17a, 45, 47, 54) associé à chaque point de distribution distribue l'aliment sec directement au mélangeur (32, 50, 56) dans la quantité de distribution correspondante et ce mélangeur peut être alimenté en même temps, par la conduite d'amenée de liquide (34, 49, 57), par l'intermédiaire d'organes obturateurs (35, 38, 49) commandés par l'unité de commande centrale (10), en les constituants liquides de l'aliment, notamment de l'eau, de sorte qu'ils préparent l'aliment mélangé en continu et le débitent directement aux points de distribution (24).

3. Dispositif selon la revendication 2,
caractérisé par le fait que le mélangeur (32, 50, 56) est constitué par un mélangeur à cyclone possédant des entrées (20 à 23, 33, 55, 66) pour l'admission du liquide acheminé sous surpression, et pour la masse sèche de l'aliment, et une sortie (42, 58) menant aux points (24) de distribution de l'aliment.

4. Dispositif selon la revendication 2 ou 3,
caractérisé par le fait que le transporteur servant à transporter la masse sèche est un ventilateur soufflant (45) muni d'aiguillages (46, 52) placés dans le tube (47) du transporteur et qui envoient l'aliment au point de distribution considéré (20, 21).

5. Dispositif selon une des revendications 2 à 4,
caractérisé par le fait que l'unité de commande centrale (10) ne commande directement que les organes obturateurs servant à l'acheminement du liquide aux mélangeurs (56) et par le fait que les organes obturateurs (60, 67, 74, 78) prévus aux sorties (55) du transporteur (54) peuvent être actionnés par l'intermédiaire d'entraînements auxiliaires (64, 65, 69, 70, 76, 79) attaqués par le liquide, et qui sont placés en aval des organes obturateurs (59) de la conduite de liquide (67) sur le trajet de circulation du liquide.

6. Dispositif selon la revendication 5,
caractérisé par le fait que les organes obturateurs (62, 77) prévus aux sorties (55) du transporteur (54) sont constitués par des volets (60) ou des vannes (67) maintenus dans la position de fermeture par des ressorts (68) ou des poids (63), et peuvent être actionnés dans le sens de l'ouverture par l'intermédiaire de volets ou aubes (65, 70) pouvant être attaqués par le liquide pénétrant dans le mélangeur (56), et par l'intermédiaire de tringleries.

7. Dispositif selon la revendication 5,
caractérisé par le fait que les organes obturateurs prévus aux sorties (55) du transporteur (54) sont constitués par des transporteurs éjecteurs (73, 74, 77, 78) qui ferment les sorties (55) correspondantes dans leur état de repos, qui peuvent être entraînés par l'intermédiaire d'une petite turbine attaquée par le liquide sortant ou par l'intermédiaire d'une roue à aubes (76), et, lorsqu'ils sont entraînés, propulsent l'aliment du transporteur (54) dans le mélangeur (56).

8. Dispositif selon la revendication 7,
caractérisé par le fait qu'il est prévu, comme transporteur éjecteur, une roue à ailettes ou à cellules, présentant plusieurs palettes racleuses (74) ou ailettes, qui est engagée dans un puits d'éjection (72, 75) du transporteur (54), cette roue pouvant être entraînée par une roue à aubes (76) placée dans le courant de liquide.

9. Dispositif selon la revendication 7,
caractérisé par le fait que le transporteur éjecteur est constitué par une vis transporteuse (78) et est disposé dans un tube transporteur (77) raccordé transversalement à une ouverture d'éjection (75) inférieure du transporteur (54) et menant au mélangeur (56), et peut être entraîné par une petite turbine placée dans le courant de liquide ou par une roue à aubes (79).
